# FASCICULE DE BREVET EUROPEEN

(11) **EP 2 398 314 B1**
(45) Date de publication et mention de la délivrance du brevet: **29.05.2019**
(21) Numéro de dépôt: 10709897.2
(22) Date de dépôt: 22.02.2010
(51) Int. Cl.: A01K 5/02

(54) **INSTALLATION D'ALIMENTATION D'ANIMAUX D'ÉLEVAGE**
ANLAGE ZUM FÜTTERN VON VIEH
PLANT FOR FEEDING LIVESTOCK

(30) Priorité: 20.02.2009 FR 0951117
(43) Date de publication de la demande: 28.12.2011
(73) Titulaire: Jeantil, 35590 L'Hermitage (FR)
(72) Inventeur: JEANTIL, Philippe, F-35132 Vezin Le Coquet (FR)
(74) Mandataire: Lavoix
(86) Numéro de dépôt international: PCT/FR2010/050301
(87) Numéro de publication internationale: WO 2010/094902

(56) Documents cités:
- EP-A- 0 721 733
- WO-A-96/14735
- DE-A1- 4 316 397
- DE-A1-102006 053 194
- DE-U1-202008 001 482
- FR-A1- 2 567 715
- FR-A1- 2 782 239
- US-A- 3 168 291

## Description

La présente invention concerne une installation d'alimentation d'animaux d'élevage.

DE 20 2008 001482 U1, DE 10 2006 053194 A1 et DE 43 16 397 A1 divulguent des installations d'alimentation d'animaux d'élevage.

Un but de l'invention est de proposer une installation facilitant le travail de l'éleveur.

A cet effet, l'invention propose une installation d'alimentation d'animaux d'élevage selon la revendication 1.

Des caractéristiques optionnelles de l'installation sont définies aux revendications 2 à 12.

L'invention et ses avantages seront mieux compris à la lecture de la description qui va suivre, donnée uniquement à titre d'exemple et faite en se référant aux dessins annexés sur lesquels :
- la figure 1 est une vue schématique de dessus d'une installation d'alimentation d'animaux d'élevage selon l'invention ;
- la figure 2 est une vue de face d'un ensemble mélangeur pour l'élaboration d'un mélange alimentaire et d'un robot distributeur de l'installation d'élevage ;
- la figure 3 est une vue de côté du robot distributeur ;
- la figure 4 est une vue analogue à celle de la figure 2 d'une autre installation non conforme à l'invention ; et
- les figures 5 et 6 sont des vues analogues à celle de la figure 3 illustrant des robots distributeurs selon des variantes de réalisation.

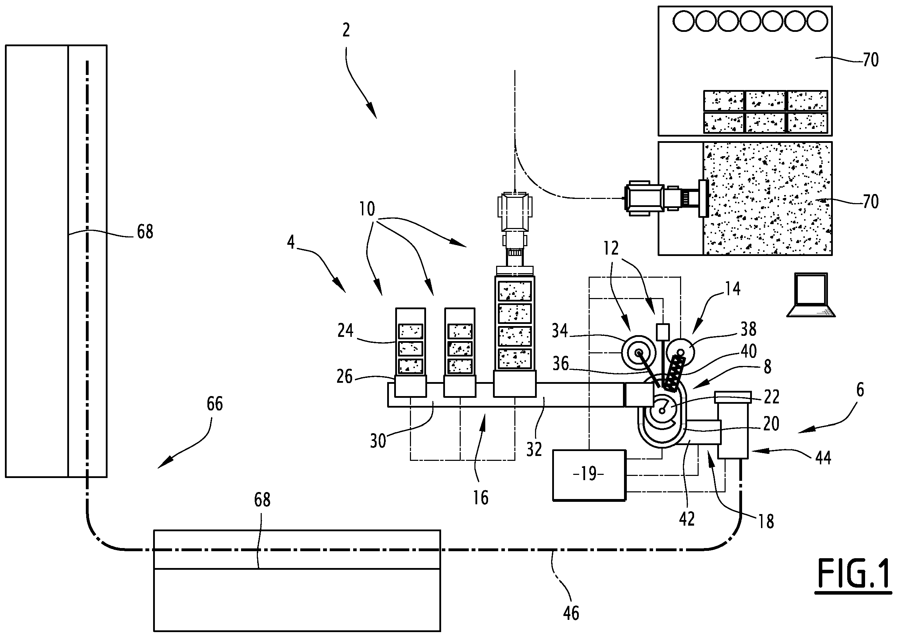

L'installation 2 d'alimentation d'animaux d'élevage illustrée sur la figure 1 est automatisée. Elle est apte à élaborer des mélanges alimentaires à partir de plusieurs produits alimentaires solides et/ou liquides et à distribuer ces mélanges à des animaux, par exemple dans une étable, de façon automatisée, sans intervention humaine.

L'installation 2 comprend un ensemble de mélange 4 automatisé apte à réaliser un mélange alimentaire à partir de plusieurs stocks produits alimentaires et un système de distribution 6 automatisé, apte à distribuer le mélange à des animaux.

L'ensemble de mélange 4 comprend un mélangeur 8, des modules de stockage et/ou de préparation de produits alimentaire comprenant des modules de démêlage 10 pour le stockage et le démêlage de produits en brins conditionnés sous forme compactée (ensilage, botte, balle...), des modules de liquide 12 pour le stockage d'aliments liquides, et des modules de complément alimentaire 14 pour le stockage de compléments alimentaires.

L'ensemble de mélange 4 comprend un dispositif collecteur 16 pour collecter les aliments fournis par les modules de démêlage 10 et les déverser dans le mélangeur 8, un dispositif chargeur 18 pour transférer le mélange alimentaire dans le système de distribution 6 et une unité de commande 19.

Le mélangeur 8, les modules de stockage 10, 12, 14, le dispositif collecteur 16, le dispositif chargeur 18 et l'unité de commande 19 sont immobiles.

L'unité de commande 19 est reliée à et commande le mélangeur 8, les modules de stockage 10, 12, 14, le dispositif collecteur 16 et le dispositif chargeur 18.

Le mélangeur 8 comprend une cuve 20 de réception des produits alimentaires et une vis de mélange 22 motorisée. Le mélangeur 8 comprend avantageusement un dispositif de pesée permettant de connaître le poids du mélange contenu dans la cuve.

Chaque module de démêlage 10 comprend une caisse 24 de réception des produits emmêlés, conditionnés sous forme compactée, et un démêleur 26 pour démêler les produits.

Le démêleur 26 comprend par exemple, de manière connue, au moins un rotor de démêlage motorisé, possédant des disques de découpages des produits et des dents ou aubes d'entraînements des produits démêlés vers une sortie du démêleur 26. Le rotor de démêlage du démêleur 26 de chaque module de démêlage 10 est adapté au produit que ce module de démêlage 10 est destiné à recevoir.

Les modules de démêlage 10 sont dépourvus de turbine d'éjection des produits. Les produits démêlés sortent par gravité par la sortie du démêleur 26.

Dans l'exemple illustré, l'ensemble mélangeur 4 comprend trois modules de démêlage 10, par exemple un pour l'ensilage de maïs ou d'herbe, un pour les fourrages du type luzerne, paille, foin ou enrubannage, et un pour d'autres produits de complément en brins divers.

Le dispositif collecteur 16 comprend un convoyeur à bande collecteur 30 passant sous les sorties des démêleurs 26 et un convoyeur à bande élévateur 32 pour déverser les produits alimentaires collectés dans le mélangeur 8.

Le dispositif collecteur 16 comprend avantageusement un système de pesée, pour déterminer le poids des produits alimentaires convoyés.

Chaque module de liquide 12 comprend un réservoir 34 de stockage de liquide et un circuit d'alimentation 36 pour alimenter la cuve 20 avec une quantité déterminée de liquide. Le circuit d'alimentation 36 comprend, par exemple, une pompe volumétrique.

Dans l'exemple de la figure 1, les module de liquide 12 sont au nombre de deux, à savoir un module de liquide 12 pour le stockage d'eau, et un module de liquide 12 pour le stockage d'un complément liquide.

La vérification de la quantité de liquide fournie est effectuée par pesage dans la cuve 20 ou en fonction du débit et de la durée de fonctionnement d'une pompe volumétrique du circuit d'alimentation.

Le module de complément 14 comprend un conteneur 38 pour le stockage de compléments alimentaires, par exemple sous la forme de granulés, et un dispositif de chargement 40 pour alimenter la cuve 20 en complément alimentaire, par exemple sous la forme d'une vis sans fin permettant de repousser une quantité déterminée de granulé dans le mélangeur 8.

La vérification de la quantité de granulés fournie est effectuée par exemple par pesage dans la cuve 20.

Le dispositif de collecteur 16, les circuits d'alimentation 36 et le dispositif de chargement 40 forment des moyens de transferts pour transférer les produits alimentaires des modules 10, 12, 14 vers le mélangeur 8.

Le dispositif chargeur 18 comprend un convoyeur à bande 42 élévateur disposé pour récupérer le mélange à une sortie du mélangeur 8 et le déverser dans un robot distributeur du système de distribution 6.

Le système de distribution 6 comprend le robot distributeur 44 mobile et un système de localisation 46 permettant au robot distributeur 44 de déterminer sa position.

Le robot distributeur 44 est autonome (il fonctionne sans opérateur), automoteur (il comprend des moyens de propulsion), et est capable de modifier sa trajectoire. Le système de localisation 46 permet au robot distributeur 44 de déterminer sa position de façon à pouvoir adapter sa trajectoire en conséquence.

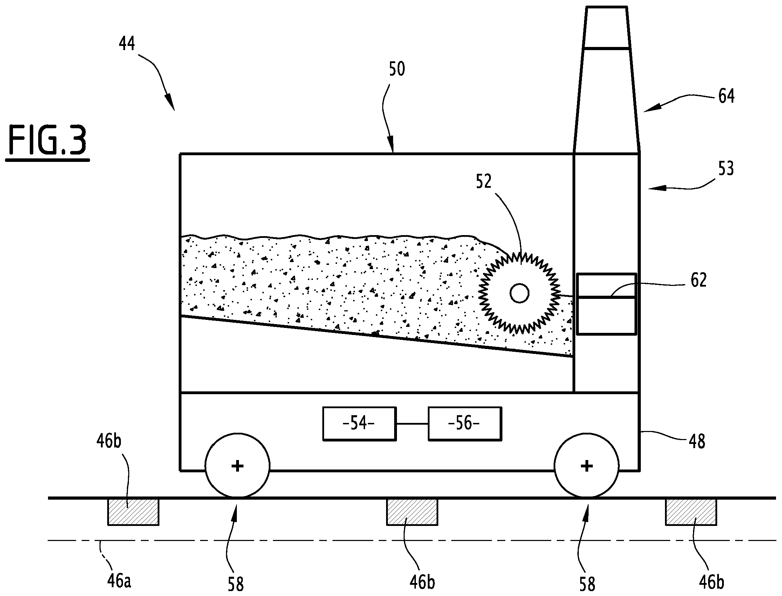

Tel qu'illustré sur la figure 3, le robot distributeur 44 comprend :
- un chariot 48 automoteur capable de changer de direction,
- une trémie 50 de stockage disposée sur le châssis 48, un démêleur 52 de trémie pour démêler le mélange de la trémie 50 et une distributrice 53 pour distribuer le contenu de la trémie 50 ;
- un système d'autoguidage 54 ;
- un système de commande 56 pour commander le robot distributeur 44 en fonction de signaux provenant du système d'autoguidage 54.

Le chariot 48 est par exemple un chariot électrique, comprenant des batteries électriques et des moyens de propulsion électrique. Il se recharge par exemple à une borne électrique à laquelle il se connecte en position d'attente. Le rechargement peut s'effectuer avec contact, vis des broches, ou sans contact, par l'intermédiaire d'un système à bobines électromagnétiques.

Tel qu'illustré, le chariot 48 comprend deux essieux 58, parmi lesquels au moins un essieu est moteur et au moins un essieu est directeur, et une direction permettant de modifier l'angle de braquage des roues du ou de chaque essieu 58 directeur.

En variante, le chariot 48 peut posséder des moyens de propulsion et de direction différents. Le chariot 48 peut par exemple être un chariot à chenilles.

Le démêleur 52 et la distributrice 53 utilisent avantageusement la même source d'énergie que les moyens de propulsion du chariot 48.

Le démêleur 52 permet de préparer le mélange pour sa prise en charge par la distributrice 53. La distributrice 53 permet de distribuer le contenu de la trémie 50 sur le côté du robot distributeur 44, via un tapis de distribution disposé en aval du démêleur 52 et permettant de déverser le mélange par une sortie latérale 62.

En option, la distributrice 53 comprend un éjecteur à turbine 64 pour éjecter de la paille dans la lisière des animaux par une lance, ce qui permet d'utiliser le robot distributeur 44 également comme pailleuse. L'ensemble formé par la trémie, le démêleur 52 et la distributrice 53 forme alors une « distributrice-pailleuse ».

En option, la trémie 50 est une trémie mélangeuse, munie par exemple d'une vis de mélange.

En option, la trémie 50 est munie d'un système de pesée pour contrôler le poids du mélange dans la trémie 50. Ceci permet de contrôler l'alimentation du robot distributeur 44 en mélange, ainsi que la quantité de mélange distribuée et la vitesse de distribution.

En option, le chariot 48 est muni à l'avant d'une lame de raclage pour repousser la ration dans l'auge ou évacuer les refus lors du déplacement du chariot 48 dans l'étable, devant les barrières d'alimentation.

Le système de commande 56 communique avec l'unité de commande 19 par l'intermédiaire d'un dispositif de communication sans fil ou d'une borne à laquelle le robot distributeur 44 se connecte en position d'attente.

Avantageusement, le robot distributeur 44 comprend un système de sécurité anticollision permettant de détecter des obstacles se trouvant sur sa trajectoire. Un tel système peut fonctionner par exemple à l'aide d'un palpeur, d'une ou plusieurs caméras ou par ultrasons.

Le système d'autoguidage 54 permet au robot distributeur 44 de déterminer sa position par rapport à son environnement, pour se diriger et effectuer la distribution du mélange aux animaux et venir charger un nouveau chargement.

Le système d'autoguidage 54 coopère avec le système de localisation 46. Ce dernier comprend des éléments de localisation aptes à être détectés par le système d'autoguidage 54.

Le système d'autoguidage 54 est par exemple du type à guidage laser, et le système de localisation 46 comprend des bornes émettant des rayonnements laser détectables par un ou plusieurs capteurs optiques du système d'autoguidage 54.

En variante ou en option, le système d'autoguidage 54 est par exemple du type à guidage optique, et le système de localisation 46 comprend des marquages au sol détectables par un ou plusieurs capteurs optiques du système d'autoguidage 54.

En variante ou en option, le système d'autoguidage 54 est par exemple du type à guidage magnétique, et le système de localisation 46 comprend des fils métalliques 46a enterrés et/ou des bornes magnétiques 46b enterrées détectables par le système d'autoguidage 54.

En variante, l'installation est dépourvue de système de localisation, et le système d'autoguidage 54 fonctionne par reconnaissance d'images captées par des caméras, après apprentissage de son environnement.

L'installation 2 est implantée dans une exploitation agricole, à proximité d'une étable 66 comprenant des barrières d'alimentation 68, devant lesquelles les aliments doivent être déposés afin que les animaux, situés derrière les barrières 66 mangent, et de zones de stockage 70 dans lesquelles l'éleveur stocke les produites alimentaires.

Le système de localisation 46 est disposé dans l'exploitation de façon à permettre au robot distributeur 44 d'identifier un chemin de distribution le long duquel chaque mélange doit être distribué.

Initialement, les modules de démêlage 10, de liquide 12 et de complément 14 sont alimentés en produits correspondants par l'éleveur. L'éleveur programme l'unité de commande 19 pour la mise en oeuvre d'un programme d'alimentation journalier. Il détermine notamment le nombre de distributions dans la journée, le mélange alimentaire de chaque distribution, la quantité de mélange à distribuer...

Le robot distributeur 44 est garé en position de chargement, sous le dispositif chargeur 18.

Ensuite, le programme d'alimentation est exécuté automatiquement par l'installation 2 au cours de la journée. Pour ce faire, l'unité de commande 19 commande les différents automates de l'installation.

Pour chaque mélange, les modules de démêlage 10, de liquide 12 et de complément 14 sont activés successivement par l'unité de commande 19 en contrôlant la quantité fournie par chaque module de stockage 10, 12, 14, à l'aide du système de pesée du dispositif collecteur 16 et/ou de celui du mélangeur 8.

Les produits sont ensuite mélangés dans le mélangeur 8, puis chargés dans le robot distributeur 44.

Ensuite, l'unité de commande 19 informe le robot distributeur 44 via le système de communication, par exemple sur la quantité de mélange à distribuer.

Une fois le chargement effectué, le robot distributeur 44 quitte la position d'attente et se déplace en se repérant grâce au système d'autoguidage 54 et au système de localisation 46, et distribue le mélange devant les barrières 66. En fonction de la quantité à distribuer, le robot distributeur 44 adapte la vitesse du démêleur 52, du tapis de distribution et/ou de l'éjecteur 64.

Une fois la distribution effectuée, le robot distributeur 44 revient en position de chargement et informe l'unité de commande 19.

L'installation 2 facilite le travail de l'éleveur, en effectuant automatiquement le mélange et la distribution des produits alimentaires. L'éleveur a uniquement en charge l'approvisionnement des modules de stockage 10, 12, 14 en produits alimentaires à partie des zones de stockage.

L'installation 2 est facilement adaptable dans tout type d'exploitation avec un coût faible. En effet, le robot distributeur 44 et son système de localisation 46 peuvent être implantés avec un coût faible.

L'ensemble de mélange 4 peut être disposé à l'extérieur de l'étable, ce qui permet un gain de place. Le robot distributeur 44 associé à une porte automatique pourra entrer et sortir de l'étable.

Le robot distributeur 44 présente l'avantage de pouvoir adapter sa trajectoire en fonction d'obstacles qui pourraient se présenter, en cherchant une trajectoire de remplacement.

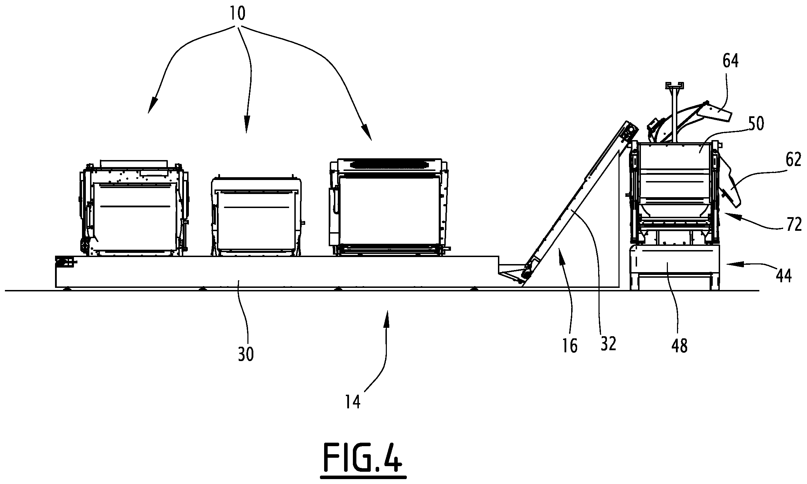

Sur la figure 4, une mélangeuse-distributrice 72 est installée sur le robot distributeur 44. Une telle machine permet à la fois de réaliser un mélange de plusieurs produits alimentaires liquides ou solides, et de les distribuer. Elle remplace le mélangeur, la trémie et la distributrice du mode de réalisation des figures 1 à 3.

En position de chargement, le robot distributeur 44 se place de façon à pouvoir charger les produits démêlés provenant des modules de démêlage 10 déversés par le convoyeur 32, les produits liquides provenant des modules de liquide 10 et les compléments alimentaires provenant du module de compléments 14, déversés par la vis 40.

Ce mode de réalisation non conforme à l'invention permet de limiter le coût d'une installation d'alimentation automatisée.

La préparation du mélange nécessite de l'énergie. Il est donc avantageux de préparer le mélange au moyen d'un mélangeur fixe, raccordé à une source d'énergie. Par conséquent, le robot distributeur peut être équipé avec des accumulateurs moins performants que dans une installation dans laquelle le mélange est entièrement préparé dans le robot distributeur et/ou possède une autonomie plus longue. En outre, le rechargement des accumulateurs est moins coûteux en temps.

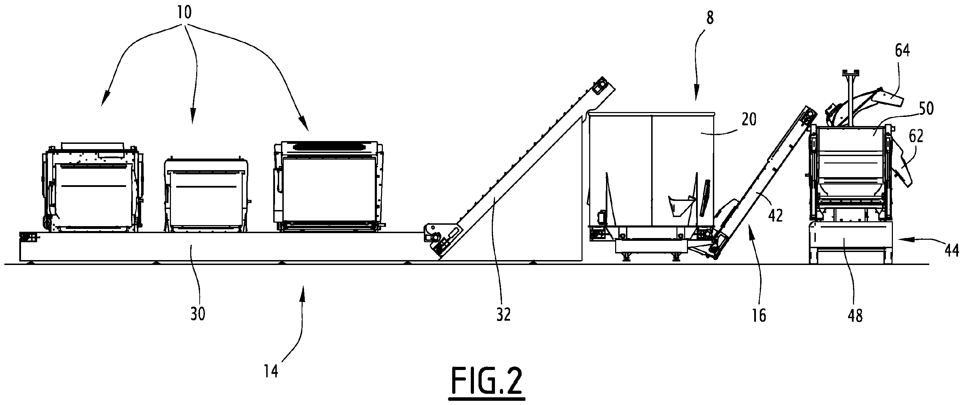

Dans une variante combinant les modes de réalisation des figures 2 et 4, l'installation comprends un mélangeur fixe et un robot distributeur muni d'une trémie mélangeuse.

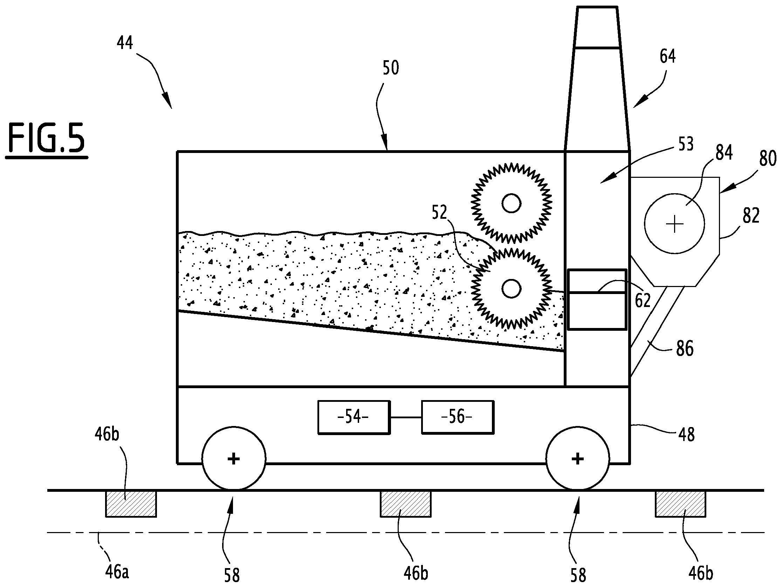

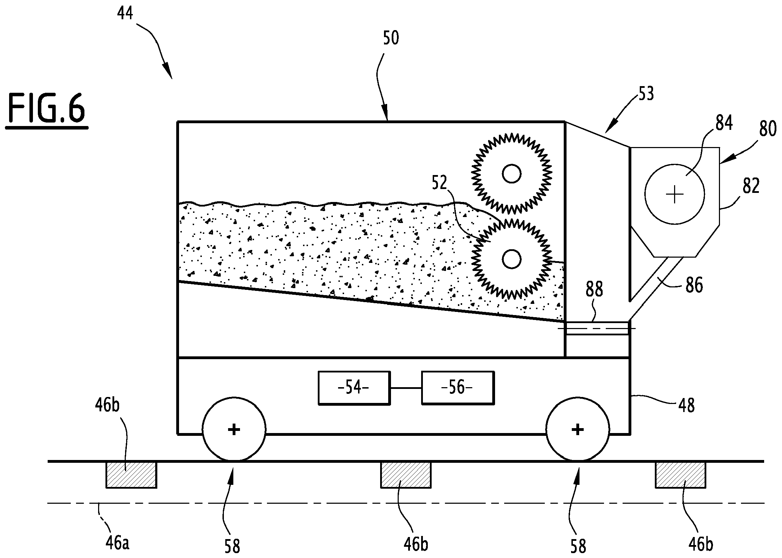

Les figures 5 et 6 illustrent des variantes de robot comprenant une trémie principal, non mélangeuse, et une trémie mélangeuse additionnelle.

Tel qu'illustré sur la figure 5, le robot distributeur 44 est analogue à celui de la figure 4 et comprend en outre une trémie additionnelle 80, de préférence mélangeuse et comprenant un conteneur 82 et une vis de mélange 84, ici d'axe horizontal, et une descente 86 pour alimenter le mélange additionnel contenu dans la trémie additionnelle 80 vers la distributrice 53, vers la sortie latérale 62 ou l'éjecteur à turbine 64.

En option, comme représenté en pointillés sur la figure 5, le robot distributeur comprend le démêleur 52 comprend deux rotors superposés pour alimenter la distributrice 53.

Tel qu'illsutré sur la figure 6, le robot distributeur 44 diffère de celui de la figure 5 en ce que la distributrice 53 ne comprend pas d'éjecteur à turbine 64, mais un tapis convoyeur 88 orienté transversalement de façon à déverser des produits latéralement sur le côté du robot distributeur, et disposé de façon à pouvoir recevoir le contenu de la trémie principal 50, avec un débit régulé par le démêleur 52, qui comprend un ou deux rotors démêleurs, et le contenu de la trémie mélangeuse additionnelle 80. Le tapis convoyeur 88 est ici disposé entre la trémie principale 50 et la trémie de mélange additionnelle 80.

La trémie additionnelle permet de préparer et distribuer un complément alimentaire, destiné par exemple à une population déterminée d'animaux. La trémie additionnelle est avantageusement mélangeuse, ce qui permet de préparer le mélange spécifiquement. La trémie additionnelle est de préférence de capacité inférieure à celle de la trémie principale et fonctionne seulement une partie du temps, de sorte qu'elle consomme une énergie raisonnable, sans affecter l'autonomie du robot distributeur.

## Revendications

1. Installation d'alimentation d'animaux d'élevage, comprenant plusieurs modules (10, 12, 14) de stockage et/ou de préparation de produits alimentaires, des moyens pour préparer un mélange à partir des produits stockés dans les modules (10, 12, 14) de stockage et/ou de préparation, et un robot distributeur (44) mobile autonome pour distribuer le mélange alimentaire aux animaux, **caractérisé en ce que** les moyens de mélange comprennent un mélangeur (8) fixe, et l'installation comprend une distributrice (50, 52, 53) installée sur le robot distributeur (44) et des moyens de transfert pour transférer un mélange du mélangeur (8) vers le robot distributeur (44).

2. Installation selon la revendication 1, dans laquelle le robot distributeur (44) comprend un système d'autoguidage (58).

3. Installation selon la revendication 2, comprenant un système de localisation (46) fixe apte à coopérer avec le système d'autoguidage (58) pour permettre au robot distributeur (44) de localiser sa position.

4. Installation selon l'une quelconque des revendications précédentes, dans laquelle le robot distributeur (44) comprend un chariot (48) automoteur, une trémie (54) et des moyens de distribution d'un mélange alimentaire contenu dans la trémie (54).

5. Installation selon la revendication 4, dans laquelle les moyens de distribution comprennent un tapis convoyeur et/ou un éjecteur.

6. Installation selon la revendication 3 ou 4, dans laquelle le robot distributeur (44) comprend un démêleur (52).

7. Installation selon l'une quelconque des revendications précédentes, comprenant des moyens (28, 30) de transferts des produits alimentaires des modules de stockage et/ou de préparation vers les moyens de mélange (8, 72).

8. Installation selon l'une quelconque des revendications précédentes, dans laquelle les moyens de mélange comprennent une mélangeuse-distributrice (72) installée sur le robot distributeur (44).

9. Installation selon l'une quelconque des revendications précédentes, comprenant au moins un module (10) de stockage et de préparation de produits en brins possédant un démêleur (26).

10. Installation selon l'une quelconque des revendications précédentes, dans laquelle le robot distributeur (44) comprend un éjecteur à turbine (64) pour éjecter de la paille.

11. Installation selon l'une quelconque des revendications précédentes, dans laquelle le robot distributeur (44) comprend une lame de raclage disposée à l'avant du robot distributeur (44).

12. Installation selon l'une quelconque des revendications précédentes, dans laquelle le robot distributeur (44) comprend une trémie principale (50), de préférence non mélangeuse, et une trémie additionnelle (80), de préférence mélangeuse.

## Patentansprüche

1. Einrichtung zur Versorgung von Zuchttieren, aufweisend mehrere Module (10, 12, 14) zur Aufbewahrung und/oder zur Bereitung von Nahrungsprodukten, Mittel zum Bereiten einer Mischung aus den Produkten, die in den Modulen (10, 12, 14) zur Aufbewahrung und/oder zur Bereitung aufbewahrt sind, und einen Roboter-Verteiler (44), der autonom bewegbar ist, zum Verteilen der Nahrungs-Mischung an die Tiere, **dadurch gekennzeichnet, dass** die Mittel zur Mischung aufweisen einen feststehenden Mischer (8), und wobei die Einrichtung aufweist einen Verteiler (50, 52, 3), der an dem Roboter-Verteiler (44) installiert ist, und Transfer-Mittel zum Transferieren einer Mischung des Mischers (8) zu dem Roboter-Verteiler (44) hin.

2. Einrichtung gemäß Anspruch 1, wobei der Roboter-Verteiler (44) ein Autoführungs-System (58) aufweist.

3. Einrichtung gemäß Anspruch 2, aufweisend ein feststehendes Lokalisierungs-System (46), das imstande ist, mit dem Autoführungs-System (58) zusammenzuwirken, um es dem Roboter-Verteiler (44) zu ermöglichen, seine Position zu lokalisieren.

4. Einrichtung gemäß irgendeinem der vorhergehenden Ansprüche, wobei der Roboter-Verteiler (44) einen selbstfahrenden Wagen (48), eine Bunkertasche (54) und Mittel zur Verteilung einer Nahrungs-Mischung aufweist, die in der Bunkertasche (54) enthalten sind.

5. Einrichtung gemäß Anspruch 4, wobei die Mittel zur Verteilung aufweisen einen Band-Förderer und/oder einen Ejektor.

6. Einrichtung gemäß Anspruch 3 oder 4, wobei der Roboter-Verteiler (44) einen Ballenöffner (52) aufweist.

7. Einrichtung gemäß irgendeinem der vorhergehenden Ansprüche, aufweisend Mittel (28, 30) zum Transfer von Nahrungsprodukten der Module zur Aufbewahrung und/oder zur Bereitung zu den Mitteln zur Mischung (8, 72) hin.

8. Einrichtung gemäß irgendeinem der vorhergehenden Ansprüche, wobei die Mittel zur Mischung aufweisen einen Misch-Verteiler (72), der an dem Roboter-Verteiler (44) installiert ist.

9. Einrichtung gemäß irgendeinem der vorhergehenden Ansprüche, aufweisend wenigstens ein Modul (10) zur Aufbewahrung und zur Bereitung von Faser-Produkten, das einen Ballenöffner (26) aufweist.

10. Einrichtung gemäß irgendeinem der vorhergehenden Ansprüche, wobei der Roboter-Verteiler (44) einen Turbinen-Ejektor (64) zum Auswerfen von Häckselgut aufweist.

11. Einrichtung gemäß irgendeinem der vorhergehenden Ansprüche, wobei der Roboter-Verteiler (44) eine Rakel-Klinge vor dem Roboter-Verteiler (44) aufweist.

12. Einrichtung gemäß irgendeinem der vorhergehenden Ansprüche, wobei der Roboter-Verteiler (44) eine Haupt-Bunkertasche (50), bevorzugt Mischer-los, und eine Zusatz-Bunkertasche (80), bevorzugt Mischer-versehen, aufweist.

## Claims

1. Installation for feeding livestock, comprising a plurality of modules (10, 12, 14) for storing and/or preparing feed products, means for preparing a mixture from the products stored in the storage and/or preparation modules (10, 12, 14), and an autonomous movable distributor robot (44) for distributing the feed mixture to the animals, **characterised in that** the mixing means comprise a fixed mixer (8), and the installation comprises a distributor (50, 52, 53) installed on the distributor robot (44) and transfer means for transferring a mixture from the mixer (8) to the distributor robot (44).

2. Installation according to claim 1, wherein the distributor robot (44) comprises a self-guiding system (58).

3. Installation according to claim 2, comprising a fixed localisation system (46) capable of cooperating with the self-guiding system (58) in order to allow the distributor robot (44) to locate its position.

4. Installation according to any one of the preceding claims, wherein the distributor robot (44) comprises a self-propelled carriage (48), a hopper (54) and means for distributing a feed mixture contained in the hopper (54).

5. Installation according to claim 4, wherein the distribution means comprise a conveyor belt and/or an ejector.

6. Installation according to claim 3 or 4, wherein the distributor robot (44) comprises a disentangler (52).

7. Installation according to any one of the preceding claims, comprising means (28, 30) for transferring the feed products from the storage and/or preparation modules to the mixing means (8, 72).

8. Installation according to any one of the preceding claims, wherein the mixing means comprise a mixer-distributor (72) installed on the distributor robot (44).

9. Installation according to any one of the preceding claims, comprising at least one module (10) for storing and preparing products in strands, having a disentangler (26).

10. Installation according to any one of the preceding claims, wherein the distributor robot (44) comprises a turbine ejector (64) for ejecting straw.

11. Installation according to any one of the preceding claims, wherein the distributor robot (44) comprises a scraping blade arranged at the front of the distributor robot (44).

12. Installation according to any one of the preceding claims, wherein the distributor robot (44) comprises a main hopper (50), which is preferably not a mixing hopper, and an additional hopper (80), preferably a mixing hopper.
